(19) Europäisches Patentamt
European Patent Office
Office européen des brevets

(11) **EP 4 606 911 A1**

(12) **EUROPEAN PATENT APPLICATION**
published in accordance with Art. 153(4) EPC

(43) Date of publication:
**27.08.2025 Bulletin 2025/35**

(51) International Patent Classification (IPC):
**C21B 5/00** (2006.01)   **C21B 13/12** (2006.01)
**C21C 5/52** (2006.01)

(21) Application number: **23879968.8**

(52) Cooperative Patent Classification (CPC):
**C21B 5/00; C21B 13/12; C21C 5/52;** Y02P 10/20

(22) Date of filing: **31.07.2023**

(86) International application number:
**PCT/KR2023/011152**

(87) International publication number:
**WO 2024/085385 (25.04.2024 Gazette 2024/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.10.2022  KR 20220133490**

(71) Applicant: **Hyundai Steel Company**
**Incheon 22525 (KR)**

(72) Inventor: **CHOI, Jae Youn**
**Incheon 22525 (KR)**

(74) Representative: **Viering, Jentschura & Partner mbB**
**Patent- und Rechtsanwälte**
**Am Brauhaus 8**
**01099 Dresden (DE)**

(54) **STEELMAKING METHOD**

(57)    A steelmaking method according to an embodiment of the present invention comprises the steps of: introducing a first raw material into a blast furnace to produce pig iron; introducing a second raw material into an electric arc furnace to produce a first molten steel; and introducing the pig iron, the first molten steel, and steel scraps into a converter to produce a second molten steel. The amount (K) of carbon dioxide emitted during the production of one ton of the second molten steel is defined by Expression 1 below. The amount (K) of carbon dioxide emitted during the production of one ton of the second molten steel satisfies Expression 2 below.

The amount (K) of carbon dioxide emitted during the production of one ton of the second molten steel = $\alpha \times X + \beta \times Y + \gamma \times Z$   [Expression 1]

The amount (K) of carbon dioxide emitted during the production of one ton of the second molten steel $< \alpha$   [Expression 2]

[FIG 1]

EP 4 606 911 A1

**Description**

[Technical Field]

The present invention relates to a steelmaking method.

[Background Art]

Generally, steelmaking methods include the blast furnace-converter process and the electric arc furnace (EAF) process.

The blast furnace-converter process involves producing pig iron by charging iron ore and bituminous coal (such as coke) into a blast furnace and melting them with hot air, and then producing molten steel by charging the pig iron produced in the blast furnace into a converter and removing impurities such as carbon, etc.

The electric arc furnace process involves producing molten steel by melting steel scrap in an electric arc furnace.

The molten steel produced by the above-described two methods is made into semi-finished products through continuous casting, and the semi-finished products are made into finished products through subsequent rolling.

Meanwhile, recently, the rapid climate change caused by greenhouse gas emissions in various industries has become a major international issue. In the steel industry, research and development is being conducted to reduce the emissions of carbon dioxide, a representative greenhouse gas.

[Disclosure]

[Technical Problem]

The present invention aims to provide a steelmaking method that can reduce the amount of carbon dioxide emitted during the steelmaking process.

[Technical Solution]

A steelmaking method according to one aspect of the present invention includes producing pig iron by inputting a first raw material into a blast furnace; producing a first molten steel by inputting a second raw material into an electric arc furnace; and producing a second molten steel by inputting the pig iron, the first molten steel, and steel scrap into a converter, wherein the amount of carbon dioxide (K) emitted during the production of one ton of the second molten steel is defined by Expression 1 below, and the amount of carbon dioxide (K) emitted during the production of one ton of the second molten steel satisfies Expression 2 below.

The amount of carbon dioxide (K) emitted during the production of one ton of the second molten steel = $\alpha \times X + \beta \times Y + \gamma \times Z$                              [Expression 1]

where X is the mass ratio of the pig iron among the pig iron, the first molten steel, and the steel scrap, Y is the mass ratio of the first molten steel among the pig iron, the first molten steel, and the steel scrap, Z is the mass ratio of the steel scrap among the pig iron, the first molten steel, and the steel scrap, X+Y+Z=1, and

$\alpha$, $\beta$, and $\gamma$ are the carbon dioxide emission coefficients of the pig iron, the first molten steel, and the steel scrap, respectively.

The amount of carbon dioxide (K) emitted during the production of one ton of the second molten steel < $\alpha$                              [Expression 2]

where $\alpha$ is as defined in Expression 1.

In an embodiment, X may be 0 or more and less than 1, Y may be 0 or more and 1 or less, and Z may be 0 or more and 1 or less.

In an embodiment, X may be 0.4 or more and less than 1.

In an embodiment, the method may satisfy Expression 3 below.

2

[Expression 3]

$$(X/(X+Z)) \times 100(\%) \leq 80(\%)$$

where X and Z are the same as defined in Expression 1.

In an embodiment, the amount of carbon dioxide (K) emitted during the production of one ton of the second molten steel may be less than or equal to 1.7 tons.

In an embodiment, the temperature of the first molten steel may be higher than or equal to the temperature of the pig iron in the step of producing the second molten steel.

In an embodiment, the step of producing the second molten steel may include forming an intermediate molten metal by mixing the pig iron and the first molten steel and then forming a final molten metal by mixing the intermediate molten metal and the steel scrap.

In an embodiment, the step of producing the second molten steel may include producing the second molten steel by simultaneously mixing the pig iron, the first molten steel, and the steel scrap.

In an embodiment, the first raw material may include iron ore, and the second raw material may include at least one of hot briquetted iron (HBI), direct reduced iron (DRI), and steel scrap.

In an embodiment, the method may further include producing a slab by continuously casting the second molten steel.

A steelmaking method according to another aspect of the present invention includes producing a first molten metal; producing a second molten metal having a lower carbon content than the first molten metal; and producing molten steel by inputting the first molten metal, the second molten metal, and steel scrap into a converter, wherein the amount of carbon dioxide (K) emitted during the production of one ton of the second molten steel is defined by Expression 1 below, and the amount of carbon dioxide (K) emitted during the production of one ton of the second molten steel satisfies Expression 2 below:

The amount of carbon dioxide (K) emitted during the production of one ton of the second molten steel $= \alpha \times X + \beta \times Y + \gamma \times Z$                    [Expression 1]

where X is the mass ratio of the pig iron among the pig iron, the first molten steel, and the steel scrap, Y is the mass ratio of the first molten steel among the pig iron, the first molten steel, and the steel scrap, Z is the mass ratio of the steel scrap among the pig iron, the first molten steel, and the steel scrap, X+Y+Z=1, and

$\alpha$, $\beta$, and $\gamma$ are the carbon dioxide emission coefficients of the pig iron, the first molten steel, and the steel scrap, respectively,

The amount of carbon dioxide (K) emitted during the production of one ton of the second molten steel $< \alpha$                    [Expression 2]

where $\alpha$ is as defined in Expression 1.

In an embodiment, the carbon content of the first molten metal may be 2 wt% or more, and the carbon content of the second molten metal may be 2 wt% or less.

In an embodiment, the first molten metal may be produced by melting a raw material including iron ore in a blast furnace, and the second molten metal may be produced by melting a raw material including steel scrap in an electric arc furnace.

A steelmaking method according to still another aspect of the present invention includes producing pig iron by inputting a first raw material into a blast furnace; producing a first molten steel by inputting a second raw material into an electric arc furnace; and producing a second molten steel by inputting the pig iron, the first molten steel, and steel scrap into a converter.

[Advantageous Effects]

A steelmaking method according to an embodiment of the present invention can reduce the amount of carbon dioxide emitted during the steelmaking process by producing a second molten steel by mixing pig iron, a first molten steel, and steel scrap.

[Description of Drawings]

FIG. 1 is a flowchart illustrating a steelmaking method according to an embodiment of the present invention.
FIG. 2 is a detailed flowchart of the step of preparing pig iron, electric arc furnace molten steel, and steel scrap shown in FIG. 1.
FIG. 3 is a detailed flowchart of the step of mixing pig iron, electric arc furnace molten steel, and steel scrap shown in FIG. 1.

[Modes of the Invention]

All terms (including technical and scientific terms) used herein have the same meaning as generally understood by those skilled in the art to which the present invention pertains.

Additionally, terms that are defined in commonly used dictionaries should be interpreted as having meanings consistent with the context of the relevant technology, and are explicitly defined herein unless they are interpreted in an idealized or overly formal sense.

Hereinafter, embodiments of the present invention will be described in detail with reference to the drawings.

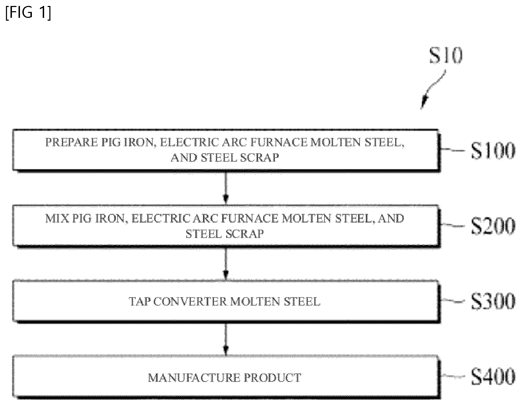

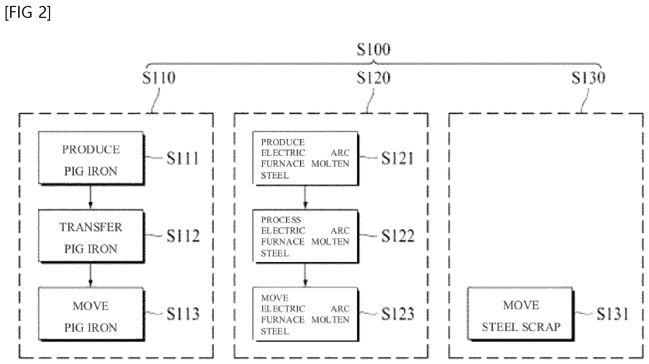

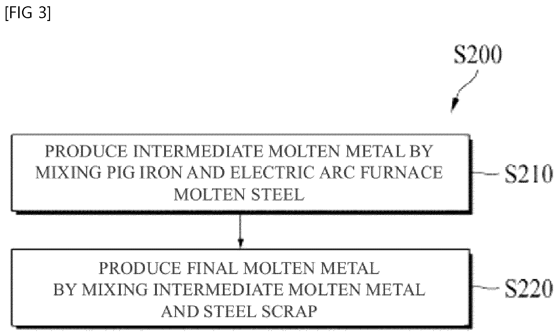

FIG. 1 is a flowchart illustrating a steelmaking method according to an embodiment of the present invention. FIG. 2 is a detailed flowchart of the step of preparing pig iron, electric arc furnace molten steel, and steel scrap shown in FIG. 1. FIG. 3 is a detailed flowchart of the step of mixing pig iron, electric arc furnace molten steel, and steel scrap shown in FIG. 1.

Referring to FIG. 1, a steelmaking method according to an embodiment of the present invention refers to a process of producing steel products by extracting iron from raw materials such as iron ore, steel scrap, etc. The electric arc furnace molten steel refers to the molten steel produced in an electric arc furnace, which may be referred to as the first molten steel herein. The converter molten steel, which will be described later, refers to the molten steel produced in a converter, which may be referred to as the second molten steel herein.

A steelmaking method (S10) according to an embodiment of the present invention includes a step of preparing pig iron, electric arc furnace molten steel, and steel scrap (S100), a step of mixing the pig iron, electric arc furnace molten steel, and steel scrap (S200), a step of tapping a converter molten steel (S300), and a step of manufacturing a product (S400).

The step of preparing pig iron, electric arc furnace molten steel, and steel scrap (S100) is explained with reference to FIGS. 1 and 2.

Referring to FIGS. 1 and 2, the step of preparing pig iron, electric arc furnace molten steel, and steel scrap (S100) includes a step of preparing pig iron (S110), a step of preparing electric arc furnace molten steel (S120), and a step of preparing steel scrap (S130).

In an embodiment, the step of preparing pig iron (S110) may include a step of producing pig iron (S111), a step of transferring the pig iron (S112), and a step of moving the pig iron (S113).

For example, in the step of producing pig iron (S111), pig iron may be produced using a first raw material including iron ore.

Specifically, in the step of producing pig iron (S111), iron ore and coke are charged into a blast furnace. Subsequently, by injecting hot air into the blast furnace, the iron ore may be reduced and melted to produce pig iron. In another embodiment, iron ore may be input into the blast furnace in the form of reduced iron (such as DRI, HBI, etc.). In another embodiment, hydrogen gas may be used as a reducing agent instead of coke.

The pig iron may include carbon. The carbon content of the pig iron may be 2 wt% or more based on the total weight of the pig iron.

In the step of transferring the pig iron (S112), the pig iron produced in the blast furnace may be transferred to a first transport vehicle. The first transport vehicle may be a torpedo ladle car (TLC). However, the first transport vehicle is not limited thereto and may be an open ladle car (OLC).

In the step of moving the pig iron (S113), the first transport vehicle loaded with pig iron may be moved to the vicinity of the subsequent converter equipment.

The above description is one example of the step of preparing pig iron (S110), and the method of producing pig iron is not limited thereto. For example, although it is described in the above-described embodiment of the present invention that pig iron is produced in a blast furnace, it is also possible to produce pig iron using an electric arc furnace.

In an embodiment, the step of preparing electric arc furnace molten steel (S120) may include a step of producing electric arc furnace molten steel (S121), a step of processing the electric arc furnace molten steel (S122), and a step of moving the electric arc furnace molten steel (S123).

Specifically, in the step of producing electric arc furnace molten steel (S121), a second raw material may be melted in an electric arc furnace to produce a molten metal. The second raw material may include at least one of hot briquetted iron (HBI), direct reduced iron (DRI), and steel scrap.

The electric arc furnace molten steel may include carbon. The carbon content of the electric arc furnace molten steel may be 2 wt% or less based on the total weight of the electric arc furnace molten steel.

The above description is one example of the step of producing electric arc furnace molten steel (S121), and the method of producing electric arc furnace molten steel is not limited thereto.

In the step of processing the electric arc furnace molten steel (S122), after determining whether the electric arc furnace molten steel has solidified, the electric arc furnace molten steel may be heated or a recarburizer may be added. For example, the heating of electric arc furnace molten steel may be performed using a ladle furnace (LF) refining machine.

In the step of moving the electric arc furnace molten steel (S123), the electric arc furnace molten steel may be loaded into a ladle, and the ladle may be moved to the vicinity of the converter equipment. The ladle may be a container with an open top and a defined internal space.

In an embodiment, the step of preparing steel scrap (S130) may include moving the steel scrap to the vicinity of the converter equipment.

After the step of preparing pig iron, electric arc furnace molten steel, and steel scrap (S100), the step of mixing the pig iron, electric arc furnace molten steel, and steel scrap (S200) is performed.

Specifically, the step of mixing the pig iron, electric arc furnace molten steel, and steel scrap (S200) may be a step of producing converter molten steel by mixing pig iron, electric arc furnace molten steel (hereinafter referred to as the first molten steel), and steel scrap in a converter.

In the steelmaking method of the present invention, the amount of carbon dioxide (K) emitted during the production of one ton of converter molten steel (hereinafter referred to as the second molten steel) is defined by Expression 1 below.

$$\text{The amount of carbon dioxide (K) emitted during the production of one ton of the second molten steel} = \alpha \times X + \beta \times Y + \gamma \times Z \qquad \text{[Expression 1]}$$

where X is the mass ratio of the pig iron among the pig iron, the first molten steel, and the steel scrap, Y is the mass ratio of the first molten steel among the pig iron, the first molten steel, and the steel scrap, Z is the mass ratio of the steel scrap among the pig iron, the first molten steel, and the steel scrap, and X+Y+Z=1. In other words, X, Y, and Z represent the mixing proportions of pig iron, the first molten steel, and steel scrap, respectively, in the step of mixing pig iron, electric arc furnace molten steel, and steel scrap (S200).

In Expression 1, $\alpha$, $\beta$, and $\gamma$ are the carbon dioxide emission coefficients of the pig iron, the first molten steel, and the steel scrap, respectively.

In the steelmaking method of the present invention, the amount of carbon dioxide (K) emitted during the production of one ton of converter molten steel (hereinafter referred to as the second molten steel) satisfies Expression 2 below.

$$\text{The amount of carbon dioxide (K) emitted during the production of one ton of the second molten steel} < \alpha \qquad \text{[Expression 2]}$$

where $\alpha$ is as defined in Expression 1.

Specifically, $\alpha$ represents the amount of carbon dioxide (K) emitted during the production of one ton of the second molten steel when X=1, Y=0, and Z=0 in Expression 1. The steelmaking method of the present invention emits less carbon dioxide than the amount of carbon dioxide (=$\alpha$) emitted during the production of the second molten steel using only pig iron (i.e., when X=1, Y=0, and Z=0 in Expression 1), thereby reducing the amount of carbon dioxide emitted during the steelmaking process. Specifically, the steelmaking method of the present invention may reduce the amount of carbon dioxide (K) emitted when producing the second molten steel by minimizing the mixing proportion of pig iron, which emits a large amount of carbon dioxide, during the production of the second molten steel.

For example, in the steelmaking method of the present invention, the amount of carbon dioxide (K) emitted during the production of one ton of the second molten steel may be less than or equal to 1.7 tons. However, the embodiment of the present invention is not limited thereto.

In the steelmaking method of the present invention, in Expression 1, X may be 0 or more and less than 1, Y may be 0 or more and 1 or less, and Z may be 0 or more and 1 or less.

In an embodiment, in Expression 1, X may be 0 or more and less than 1, Y may be more than 0 and 1 or less, and Z may be 0 or more and 1 or less. In other words, pig iron and the first molten steel may essentially be used in the production of the second molten steel.

In an embodiment, in Expression 1, X may be 0.4 or more and less than 1, Y may be 0 or more and 1 or less, and Z may be 0 or more and 1 or less. When X is less than 0.4, the operation may actually be difficult due to an insufficient heat source.

The steelmaking method of the present invention may satisfy Expression 3 below.

[Expression 3]

$$(X/(X+Z)) \times 100(\%) \leq 80(\%)$$

where X and Z are the same as defined in Expression 1.

In other words, Expression 3 means that, in the steelmaking method of the present invention, the ratio of (pig iron mass / (pig iron mass + steel scrap mass)) x 100(%) is 80% or less during the production of the second molten steel. This indicates that the mixing ratio of pig iron to steel scrap in the steelmaking method of the present invention is reduced compared to the conventional method where the hot metal ratio (HMR) was 85% or more when producing molten steel by charging pig iron and steel scrap into a blast furnace.

As a result, the steelmaking method of the present invention may reduce the amount of carbon dioxide emitted during the production of the second molten steel.

Referring to FIGS. 1 to 3, the step of mixing the pig iron, electric arc furnace molten steel, and steel scrap (S200) according to an embodiment may include a step of producing an intermediate molten metal by mixing pig iron and electric arc furnace molten steel (S210) and a step of producing a final molten metal by mixing the intermediate molten metal and steel scrap (S220).

Specifically, the step of producing an intermediate molten metal by mixing pig iron and electric arc furnace molten steel (S210) may be for mixing pig iron and electric arc furnace molten steel first, excluding steel scrap. The composition of the intermediate molten metal produced at this time may be adjusted before being mixed with steel scrap. For example, impurities (such as silicon, phosphorus, and sulfur) in the intermediate molten metal may be removed in a pig iron pre-treatment facility.

Afterward, the step of producing a final molten metal by mixing the intermediate molten metal and steel scrap (S220) may be performed. Specifically, the intermediate molten metal with impurities removed and the steel scrap may be charged into a converter, and the final molten metal may be produced.

Subsequently, the temperature and composition of the final molten metal may be adjusted using a ladle furnace (LF) refining machine. However, the present invention is not limited to the above description, and additional processes such as vacuum degassing, etc. may be performed.

However, the embodiment of the present invention is not limited to what is shown in FIG. 3. In another embodiment of the present invention, the step of mixing pig iron, electric arc furnace molten steel, and steel scrap (S200) may include simultaneously inputting pig iron, electric arc furnace molten steel, and steel scrap into a converter and mixing them.

After the step of mixing the pig iron, electric arc furnace molten steel, and steel scrap (S200), the step of tapping converter molten steel (S300) may be performed. Afterward, the step of manufacturing a product by continuously casting electric arc furnace molten steel (S400) may be performed.

Specifically, the step of manufacturing a product (S400) may include making a semi-finished product using electric arc furnace molten steel and then making a finished product from the semi-finished product.

Specifically, in the step of manufacturing a product (S400), electric arc furnace molten steel may be made into a semi-finished product through a continuous casting process. For example, the semi-finished product may be a slab or a billet. However, the semi-finished product is not limited thereto and may be a bloom.

Subsequently, the semi-finished product may be made into a finished product through a rolling process. The rolling process may be either a hot rolling or a cold rolling process. The finished product may be a steel plate or a wire rod.

The steelmaking method according to an embodiment of the present invention may reduce the amount of pig iron used compared to conventional methods and decrease the amount of carbon dioxide emitted during the steelmaking process by manufacturing steel through inputting pig iron, electric arc furnace molten steel, and steel scrap into a converter.

Meanwhile, the steelmaking method according to an embodiment of the present invention is not limited to the above description.

The steelmaking method according to an embodiment includes producing a first molten metal, producing a second molten metal having a lower carbon content than the first molten metal, and producing molten steel by inputting the first molten metal, the second molten metal, and steel scrap into a converter.

For example, the carbon content of the first molten metal may be 2 wt% or more based on the total weight of the first molten metal. For example, the first molten metal may be produced by melting a raw material including iron ore in a blast furnace, and may be, for example, pig iron. However, the embodiment of the first molten metal is not limited thereto.

For example, the carbon content of the second molten metal may be 2 wt% or less based on the total weight of the second molten metal. For example, the second molten metal may be produced by melting a raw material including steel scrap in an electric arc furnace, and may be, for example, electric arc furnace molten steel. However, the embodiment of the second molten metal is not limited thereto.

For example, the molten steel produced by inputting the first molten metal, the second molten metal, and steel scrap into the converter may be electric arc furnace molten steel.

The first molten metal, the second molten metal, and the molten steel may satisfy Expressions 1 to 3 above. Specifically, in Expressions 1 to 3, the relationship among pig iron, electric arc furnace molten steel, and converter molten steel may correspond to the relationship among the first molten metal, the second molten metal, and the molten steel.

Therefore, the steelmaking method according to an embodiment of the present invention may reduce the amount of carbon dioxide emitted during the steelmaking process by producing molten steel using not only the first molten metal with a relatively high carbon content, but also the second molten metal with a relatively low carbon content.

Tables 1 and 2 below show the calculated amount of carbon dioxide (K) emitted during the production of one ton of the second molten steel according to the mixing ratios of pig iron, electric arc furnace molten steel, and steel scrap, as well as the emission coefficients ($\alpha$, $\beta$, and $\gamma$).

The pig iron in Tables 1 and 2 below was produced by mixing sintered ore, lump ore, and pellets in a mass ratio of 90.6:7.2:0.6.

The compositions of the electric arc furnace molten steel in Tables 1 and 2 below are different.

Specifically, the electric arc furnace molten steel in Table 1 below was produced by mixing HBI and steel scrap in a mass ratio of 60:40. As a result, in Table 1 below, the carbon dioxide emission coefficient ($\alpha$) for pig iron was calculated to be 2.06, the emission coefficient ($\beta$) for the first molten steel was calculated to be 0.912, and the emission coefficient ($\gamma$) for steel scrap was calculated to be 0.028.

The contents of Table 1 are as follows.

[Table 1]

| Classification | Mixing ratio | | | Emission coefficient | | | Carbon dioxide emissions (K) |
|---|---|---|---|---|---|---|---|
| | Pig iron | Electric arc furnace molten steel | Steel scrap | Pig iron | Electric arc furnace molten steel | Steel scrap | |
| Example 1 | 0.7 | 0 | 0.3 | 2.06 | 0.912 | 0.028 | 1.4504 |
| Example 2 | 0.6 | 0 | 0.4 | 2.06 | 0.912 | 0.028 | 1.2472 |
| Example 3 | 0.5 | 0 | 0.5 | 2.06 | 0.912 | 0.028 | 1.044 |
| Example 4 | 0.4 | 0 | 0.6 | 2.06 | 0.912 | 0.028 | 0.8408 |
| Example 5 | 0.6 | 0.1 | 0.3 | 2.06 | 0.912 | 0.028 | 1.3356 |
| Example 6 | 0.5 | 0.1 | 0.4 | 2.06 | 0.912 | 0.028 | 1.1324 |
| Example 7 | 0.4 | 0.1 | 0.5 | 2.06 | 0.912 | 0.028 | 0.9292 |
| Example 8 | 0.6 | 0.2 | 0.2 | 2.06 | 0.912 | 0.028 | 1.424 |
| Example 9 | 0.5 | 0.2 | 0.3 | 2.06 | 0.912 | 0.028 | 1.2208 |
| Example 10 | 0.4 | 0.2 | 0.4 | 2.06 | 0.912 | 0.028 | 1.0176 |
| Example 11 | 0.5 | 0.3 | 0.2 | 2.06 | 0.912 | 0.028 | 1.3092 |
| Example 12 | 0.4 | 0.3 | 0.3 | 2.06 | 0.912 | 0.028 | 1.106 |
| Example 13 | 0.5 | 0.4 | 0.1 | 2.06 | 0.912 | 0.028 | 1.3976 |
| Example 14 | 0.4 | 0.4 | 0.2 | 2.06 | 0.912 | 0.028 | 1.1944 |
| Example 15 | 0.5 | 0.5 | 0 | 2.06 | 0.912 | 0.028 | 1.486 |
| Example 16 | 0.4 | 0.5 | 0.1 | 2.06 | 0.912 | 0.028 | 1.2828 |
| Example 17 | 0.4 | 0.6 | 0 | 2.06 | 0.912 | 0.028 | 1.3712 |

Specifically, the electric arc furnace molten steel in Table 2 was produced with a HBI:steel scrap ratio of 0:100, meaning it was produced using only steel scrap without any HBI. As a result, in Table 2 below, the carbon dioxide emission coefficient ($\alpha$) for pig iron was calculated to be 2.06, the emission coefficient ($\beta$) for the first molten steel was calculated to be 0.437, and the emission coefficient ($\gamma$) for steel scrap was calculated to be 0.028.

The contents of Table 2 are as follows.

[Table 2]

| Classification | Mixing ratio | | | Emission coefficient | | | Carbon dioxide emissions (K) |
|---|---|---|---|---|---|---|---|
| | Pig iron | Electric arc furnace molten steel | Steel scrap | Pig iron | Electric arc furnace molten steel | Steel scrap | |
| Example 18 | 0.7 | 0 | 0.3 | 2.06 | 0.437 | 0.028 | 1.4504 |
| Example 19 | 0.6 | 0 | 0.4 | 2.06 | 0.437 | 0.028 | 1.2472 |
| Example 20 | 0.5 | 0 | 0.5 | 2.06 | 0.437 | 0.028 | 1.044 |
| Example 21 | 0.4 | 0 | 0.6 | 2.06 | 0.437 | 0.028 | 0.8408 |
| Example 22 | 0.7 | 0.1 | 0.2 | 2.06 | 0.437 | 0.028 | 1.4913 |
| Example 23 | 0.6 | 0.1 | 0.3 | 2.06 | 0.437 | 0.028 | 1.2881 |
| Example 24 | 0.5 | 0.1 | 0.4 | 2.06 | 0.437 | 0.028 | 1.0849 |
| Example 25 | 0.4 | 0.1 | 0.5 | 2.06 | 0.437 | 0.028 | 0.8817 |
| Example 26 | 0.6 | 0.2 | 0.2 | 2.06 | 0.437 | 0.028 | 1.329 |
| Example 27 | 0.5 | 0.2 | 0.3 | 2.06 | 0.437 | 0.028 | 1.1258 |
| Example 28 | 0.4 | 0.2 | 0.4 | 2.06 | 0.437 | 0.028 | 0.9226 |
| Example 29 | 0.6 | 0.3 | 0.1 | 2.06 | 0.437 | 0.028 | 1.3699 |
| Example 30 | 0.5 | 0.3 | 0.2 | 2.06 | 0.437 | 0.028 | 1.1667 |
| Example 31 | 0.4 | 0.3 | 0.3 | 2.06 | 0.437 | 0.028 | 0.9635 |
| Example 32 | 0.6 | 0.4 | 0 | 2.06 | 0.437 | 0.028 | 1.4108 |
| Example 33 | 0.5 | 0.4 | 0.1 | 2.06 | 0.437 | 0.028 | 1.2076 |
| Example 34 | 0.4 | 0.4 | 0.2 | 2.06 | 0.437 | 0.028 | 1.0044 |
| Example 35 | 0.5 | 0.5 | 0 | 2.06 | 0.437 | 0.028 | 1.2485 |
| Example 36 | 0.4 | 0.5 | 0.1 | 2.06 | 0.437 | 0.028 | 1.0453 |
| Example 37 | 0.4 | 0.6 | 0 | 2.06 | 0.437 | 0.028 | 1.0862 |

Referring to Tables 1 and 2, the steelmaking method according to an embodiment can reduce the amount of pig iron used and decrease the amount of carbon dioxide emitted during the steelmaking process by manufacturing steel through inputting pig iron, electric arc furnace molten steel, and steel scrap into a converter.

As described above, preferred embodiments of the present invention have been described, and it is apparent to those skilled in the art that the present invention may be embodied in other specific forms without departing from the spirit or scope of the present invention, in addition to the embodiments described above.

In other words, the above-described embodiments should be considered as illustrative rather than restrictive, and accordingly, the present invention is not limited to the above description and may be modified within the scope of the appended claims and their equivalents.

**Claims**

1.　A steelmaking method comprising:

producing pig iron by inputting a first raw material into a blast furnace;
producing a first molten steel by inputting a second raw material into an electric arc furnace; and
producing a second molten steel by inputting the pig iron, the electric arc furnace molten steel, and steel scrap into a converter,
wherein the amount of carbon dioxide (K) emitted during the production of one ton of the second molten steel is defined by Expression 1 below, and
the amount of carbon dioxide (K) emitted during the production of one ton of the second molten steel satisfies Expression 2 below:

The amount of carbon dioxide (K) emitted during the production of one ton of the second molten steel = $\alpha \times X + \beta \times Y + \gamma \times Z$    [Expression 1]

where

X is the mass ratio of the pig iron among the pig iron, the first molten steel, and the steel scrap,
Y is the mass ratio of the first molten steel among the pig iron, the first molten steel, and the steel scrap,
Z is the mass ratio of the steel scrap among the pig iron, the first molten steel, and the steel scrap,

$$X+Y+Z=1,$$

and
$\alpha$, $\beta$, and $\gamma$ are the carbon dioxide emission coefficients of the pig iron, the first molten steel, and the steel scrap, respectively,

The amount of carbon dioxide (K) emitted during the production of one ton of the second molten steel < $\alpha$    [Expression 2]

where $\alpha$ is as defined in Expression 1.

2. The steelmaking method of claim 1, wherein

X is 0 or more and less than 1,
Y is 0 or more and 1 or less, and
Z is 0 or more and 1 or less.

3. The steelmaking method of claim 2, wherein X is 0.4 or more and less than 1.

4. The steelmaking method of claim 2, which satisfies Expression 3 below:

$$[\text{Expression 3}]$$

$$(X/(X+Z))\times100(\%) \leq 80(\%)$$

where X and Z are the same as defined in Expression 1.

5. The steelmaking method of claim 1, wherein the amount of carbon dioxide (K) emitted during the production of one ton of the second molten steel is less than or equal to 1.7 tons.

6. The steelmaking method of claim 1, wherein the temperature of the first molten steel is higher than or equal to the temperature of the pig iron in the step of producing the second molten steel.

7. The steelmaking method of claim 1, wherein the step of producing the second molten steel includes forming an intermediate molten metal by mixing the pig iron and the first molten steel and then forming a final molten metal by mixing the intermediate molten metal and the steel scrap.

8. The steelmaking method of claim 1, wherein the step of producing the second molten steel includes producing the second molten steel by simultaneously mixing the pig iron, the first molten steel, and the steel scrap.

9. The steelmaking method of claim 1, wherein the first raw material includes iron ore, and the second raw material includes at least one of hot briquetted iron (HBI), direct reduced iron (DRI), and steel scrap.

10. The steelmaking method of claim 1, further comprising producing a slab by continuously casting the second molten steel.

11. A steelmaking method comprising:

producing a first molten metal;
producing a second molten metal having a lower carbon content than the first molten metal; and
producing molten steel by inputting the first molten metal, the second molten metal, and steel scrap into a converter,
wherein the amount of carbon dioxide (K) emitted during the production of one ton of the molten steel is defined Expression 1 below, and
the amount of carbon dioxide (K) emitted during the production of one ton of the molten steel satisfies Expression 2 below:

[Expression 1]  The amount of carbon dioxide (K) emitted during the production of one ton of the molten steel = $\alpha \times X + \beta \times Y + \gamma \times Z$     [Expression 1]

where

X is the mass ratio of the first molten metal among the first molten metal, the second molten metal, and the steel scrap,
Y is the mass ratio of the second molten metal among the first molten metal, the second molten metal, and the steel scrap,
Z is the mass ratio of the steel scrap among the first molten metal, the second molten metal, and the steel scrap,

$$X+Y+Z=1,$$

and
$\alpha$, $\beta$, and $\gamma$ are the carbon dioxide emission coefficients of the first molten metal, the second molten metal, and the steel scrap, respectively,

The amount of carbon dioxide (K) emitted during the production of one ton of the molten steel < $\alpha$     [Expression 2]

where $\alpha$ is as defined in Expression 1.

12. The steelmaking method of claim 11, wherein the carbon content of the first molten metal is 2 wt% or more, and the carbon content of the second molten metal is 2 wt% or less.

13. The steelmaking method of claim 11, wherein the first molten metal is produced by melting a raw material including iron ore in a blast furnace, and the second molten metal is produced by melting a raw material including steel scrap in an electric arc furnace.

14. A steelmaking method comprising:

producing pig iron by inputting a first raw material into a blast furnace;
producing a first molten steel by inputting a second raw material into an electric arc furnace; and
producing a second molten steel by inputting the pig iron, the first molten steel, and steel scrap into a converter.

[FIG 1]

S10

| PREPARE PIG IRON, ELECTRIC ARC FURNACE MOLTEN STEEL, AND STEEL SCRAP | S100 |

↓

| MIX PIG IRON, ELECTRIC ARC FURNACE MOLTEN STEEL, AND STEEL SCRAP | S200 |

↓

| TAP CONVERTER MOLTEN STEEL | S300 |

↓

| MANUFACTURE PRODUCT | S400 |

[FIG 2]

[FIG 3]

S200

```
┌─────────────────────────────────────────────────┐
│ PRODUCE INTERMEDIATE MOLTEN METAL BY             │
│ MIXING PIG IRON AND ELECTRIC ARC FURNACE         │ ── S210
│ MOLTEN STEEL                                     │
└─────────────────────────────────────────────────┘
                        │
                        ▼
┌─────────────────────────────────────────────────┐
│ PRODUCE FINAL MOLTEN METAL                       │
│ BY MIXING INTERMEDIATE MOLTEN METAL              │ ── S220
│ AND STEEL SCRAP                                  │
└─────────────────────────────────────────────────┘
```

## INTERNATIONAL SEARCH REPORT

| International application No. |
| --- |
| **PCT/KR2023/011152** |

**A.    CLASSIFICATION OF SUBJECT MATTER**

**C21B 5/00**(2006.01)i; **C21B 13/12**(2006.01)i; **C21C 5/52**(2006.01)i

According to International Patent Classification (IPC) or to both national classification and IPC

**B.    FIELDS SEARCHED**

Minimum documentation searched (classification system followed by classification symbols)

C21B 5/00(2006.01); C21B 11/10(2006.01); C21C 1/02(2006.01); C21C 5/28(2006.01); C21C 5/52(2006.01); C21C 7/064(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 용강(molten steel), 용선(molten iron), 전기로(electric furnace), 고로(blast furnace), 전로(converter), 이산화탄소(carbon dioxide), 철스크랩(steel scrap)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2011-111625 A (JFE STEEL CORP.) 09 June 2011 (2011-06-09)<br>See paragraphs [0002], [0018], [0047], [0049], [0052]-[0053] and [0056]-[0057] and claim 1. | 1-14 |
| A | JP 2009-102697 A (JFE STEEL CORP. et al.) 14 May 2009 (2009-05-14)<br>See claims 1 and 4. | 1-14 |
| A | JP 2012-092435 A (JFE STEEL CORP.) 17 May 2012 (2012-05-17)<br>See paragraphs [0026]-[0027] and claims 1 and 5-6. | 1-14 |
| A | KR 10-1818372 B1 (HYUNDAI STEEL COMPANY) 12 January 2018 (2018-01-12)<br>See paragraphs [0029], [0033] and [0037] and claims 1-2. | 1-14 |
| A | KR 10-2020-0005848 A (POSCO) 17 January 2020 (2020-01-17)<br>See paragraph [0002] and claims 1 and 8. | 1-14 |

☐ Further documents are listed in the continuation of Box C.          ☑ See patent family annex.

| | |
| --- | --- |
| *    Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
| --- | --- |
| **18 January 2024** | **18 January 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/011152**

| Patent document cited in search report | | | Publication date (day/month/year) | Patent family member(s) | | | Publication date (day/month/year) |
|---|---|---|---|---|---|---|---|
| JP | 2011-111625 | A | 09 June 2011 | JP | 5549198 | B2 | 16 July 2014 |
| JP | 2009-102697 | A | 14 May 2009 | JP | 5236926 | B2 | 17 July 2013 |
| JP | 2012-092435 | A | 17 May 2012 | JP | 5909957 | B2 | 27 April 2016 |
| KR | 10-1818372 | B1 | 12 January 2018 | None | | | |
| KR | 10-2020-0005848 | A | 17 January 2020 | KR | 10-2103380 | B1 | 22 April 2020 |

Form PCT/ISA/210 (patent family annex) (July 2022)